# NEUE EUROPÄISCHE PATENTSCHRIFT

(11) **EP 0 789 946 B2**
(45) Veröffentlichungstag und Bekanntmachung des Hinweises auf die Entscheidung über den Einspruch: **21.05.2003**
(45) Hinweis auf die Patenterteilung: 18.03.1998
(21) Anmeldenummer: 95944828.3
(22) Anmeldetag: 23.10.1995
(51) Int. Cl.: H02G 3/12

(54) **ELEKTROINSTALLATIONSDOSE FÜR DIE MONTAGE IN WÄNDEN, INSBESONDERE HOHLWÄNDEN**
ELECTRICAL INSTALLATION BOX FOR FITTING IN WALLS, ESPECIALLY HOLLOW WALLS
BOITIER D'INSTALLATION ELECTRIQUE A MONTER DANS DES MURS, NOTAMMENT DANS DES MURS CREUX

(30) Priorität: 04.11.1994 AT 205294
(43) Veröffentlichungstag der Anmeldung: 20.08.1997
(73) Patentinhaber: Putz, Georg, 5441 Abtenau (AT)
(72) Erfinder: Putz, Georg, 5441 Abtenau (AT)
(74) Vertreter: Wildhack, Helmut, Dipl.-Ing. Dr.
(86) Internationale Anmeldenummer: AT9500209
(87) Internationale Veröffentlichungsnummer: WO96014682

(56) Entgegenhaltungen:
- DE-A- 4 226 559
- DE-A- 4 443 519
- DE-U- 9 312 582
- FR-A- 2 147 029
- FR-A- 2 378 389

## Beschreibung

Die Erfindung bezieht sich auf eine Elektroinstallationsdose für die Montage in Wänden, insbesondere Hohlwänden, mit relativ zur Dose beweglichen Pratzen zur Befestigung der Dose in einer Öffnung der Wand, wobei jede Pratze an einer Zuglasche befestigt ist, die in Achsrichtung der Dose in einer Führung der Dose verschiebbar geführt und mit einer Verzahnung versehen ist, der eine Gegenverzahnung an der Dose zugeordnet ist.

Bekanntlich bereitet es häufig Schwierigkeiten, Elektroinstallationsdosen, welche zur Aufnahme von Schaltern, Steckdosen usw. dienen, stabil in einer Öffnung der Wand zu befestigen, insbesondere, wenn es sich um eine Hohlwand handelt, was bei Gips- oder Holzwänden häufig der Fall ist. Hiefür übliche Dosen haben Metallpratzen, deren jede mittels einer in der Dose gehalterten Schraube angezogen werden kann. Die hiefür erforderliche Montagezeit ist beträchtlich und die Produktionskosten einer solchen Dose sind relativ hoch. Es wurden daher bereits Elektroinstallationsdosen der eingangs beschriebenen Art entwickelt (DE-A 2 137 299, FR-A 2 147 029), bei denen die Dose durch Zug in axialer Richtung auf die Zuglaschen in der Wandöffnung befestigt wird. Wird die Zuglasche aus der Dose herausgezogen, so gleiten die Zähne der Verzahnung der Zuglasche über die Zähne der Gegenverzahnung, bis die Pratzen an dem Rand der Wandöffnung, in welcher die Dose zu montieren ist, zur Anlage kommen. Sobald diese gewünschte Endstellung erreicht ist, hält die in die Verzahnung der Zuglasche eingerastete Gegenverzahnung die Zuglasche in der eingestellten Lage fest, sodaß sich eine sichere Verankerung der Dose in der Wandöffnung ergibt. Als nachteilig hat sich jedoch erwiesen, daß dieses Anziehen der Zuglaschen beschwerlich ist, da es nur mit einer schweren Zange durchführbar ist. Es haben sich daher diese bekannten Konstruktionen in der Praxis nicht durchsetzen können.

Aus DE 9312582 U ist es bekannt, eine Fixierplatte in einer Schalterdose mittels zweier Befestigungsbügel zu fixieren, in deren Zähne Zungen aus Kunststoff, Metall oder Federstahl einrasten und die Fixierplatte festhaiten. Weiters ist es aus DE 4226559 A bekannt, an einer Längsführung der Hohlwanddose eine Zahnreihe anzuordnen, welche mit einer Gegenverzahnung einer Lasche zusammenwirkt, die an der Unterseite der Wand anliegt.

Die Erfindung setzt sich zur Aufgabe, eine Elektroinstallationsdose der eingangs beschriebenen Art so zu verbessern, daß gegenüber den zuletzt beschriebenen bekannten Konstruktionen die Montage der Dose vereinfacht wird, dennoch aber ein sicherer Sitz der Dose in der Wandöffnung sichergestellt ist. Gegenüber der üblichen, eine Schraubbefestigung aufweisenden Konstruktion soll die erfindungsgemäße Konstruktion wesentliche Einsparungen an Montagezeit und Produktionskosten bringen. Die Erfindung löst diese Aufgabe durch die Merkmale des kennzeichnenden Teiles des Anspruches 1. Diese federnde Zunge ermöglicht es, die Zuglasche ohne großen Kraftaufwand in axialer Richtung der Dose zwecks Befestigung derselben anzuziehen. Wie bisher gleiten hiebei die Zähne der Verzahnung der Zuglasche über die Zähne der Gegenverzahnung, jedoch weicht hiebei die Zunge federnd aus und erleichtert dadurch die Verschiebung der Zuglasche, hält aber dennoch die Zuglasche in der eingestellten Lage sicher fest. Diese Montage ist rasch durchführbar, die Herstellungskosten für die mit einer solchen federnden Zunge versehenen Führung der Dose sind gering.

Normalerweise kommt eine Demontage der Dose aus der Wandöffnung nicht in Betracht. Sollte eine solche Demontage aber erforderlich sein, so läßt sie sich bei der erfindungsgemäßen Konstruktion in einfacher Weise dadurch durchführen, daß die federnde Zunge mittels eines Werkzeuges, etwa eines Schraubenziehers, zurückgedrückt und die Zuglasche in die Dose hineingestoßen wird, so daß die Dose freikommt.

Gemäß einer bevorzugten Ausführungsform der Erfindung ist die federnde Zunge von einem Innenwandteil der Führung gebildet. Dies senkt die Hersteilungskosten, denn die früher erwähnte, einstückige Ausbildung lässt sich in einfacher Weise mit der gesamten Dose aus Kunststoff ausbilden, insbesondere spritzen. Die Federwirkung der Zunge läßt sich hiebei in einfacher Weise dadurch erzielen, daß der die federnde Zunge bildende Innenwandteil der Führung gegenüber der restlichen Innenwand der Führung eine verringerte Wandstärke aufweist. Zweckmäßig ist hiebei der die federnde Zunge bildende Innenwandteil an jenem Ende der Führung angeordnet, welches dem Rand der Öffnung der Dose benachbart ist.

Eine besonders sichere Verankerung der Dose in der montierten Lage ergibt sich gemäß einer Weiterbildung der Erfindung dann, wenn die Zähne der Verzahnung der Zuglasche gegen den Boden der Dose zu geneigt sind, wogegen die Zähne der Gegenverzahnung vom Boden der Dose weg geneigt sind. Außerdem erleichtert eine solche Zahnneigung das Herausziehen der Zuglasche.

Aus Gründen der Produktionskostensenkung ist es zweckmäßig, wenn die Verzahnung an der Zuglasche eine lange Zahnreihe bildet, wogegen die Gegenverzahnung nur von wenigen, z. B. zwei, Zähnen gebildet ist. Die Länge der Zahnreihe ist hiebei so zu wählen, daß die in Frage kommenden Wandstärken problemlos beherrscht werden können.

Gleichfalls aus Produktionsgründen ist es zweckmäßig, im Rahmen der Erfindung die Gegenverzahnung an der federnden Zunge von aus der Oberfläche der Zunge vorspringenden Zähnen zu bilden. An der Zuglasche können die Zähne hingegen in das Material der Zuglasche eingebettet sein.

Zumeist sind die Zuglaschen verhältnismäßig lang, um einen ausreichenden Verstellweg zu haben und sich dadurch an einen großen Wandstärkenbereich anpassen zu können. Nach dem Aziehen der Zuglaschen und der dadurch bewirkten Verankerung der Dose in der Wandöffnung können die vorstehenden Enden der Zuglasche abgeschnitten werden, was bei Ausbildung der Zuglaschen als reißfeste Kunststoffbänder problemlos möglich ist. Dennoch kann es vorkommen, daß beim Abschneiden der überstehenden Zuglaschenenden die federnden Zungen beschädigt werden. Dies kann gemäß einer Weiterbildung der Erfindung dadurch vermieden werden, daß jede Zuglasche aus biegsamem Material, z. B. einem reißfesten Kunststoffband, besteht und daß der Boden der Dose für das zurückgebogene Ende jeder Zuglasche eine Durchstecköffnung aufweist. Die Enden der Zuglasche brauchen dadurch nach dem Anziehen der Zuglaschen nicht mehr abgeschnitten zu werden, sondern sie werden zurückgebogen und durch die Durchstecköffnungen des Dosenbodens hindurchgesteckt. Dies bedeutet eine weitere Erspamis an Montagezeit. Zweckmäßig ist hiebei jede Durchstecköffnung der ihr zugeordneten Führung unmittelbar benachbart, um keinen Platz für den in der Dose zu montierenden Schalter oder dgl. zu verlieren.

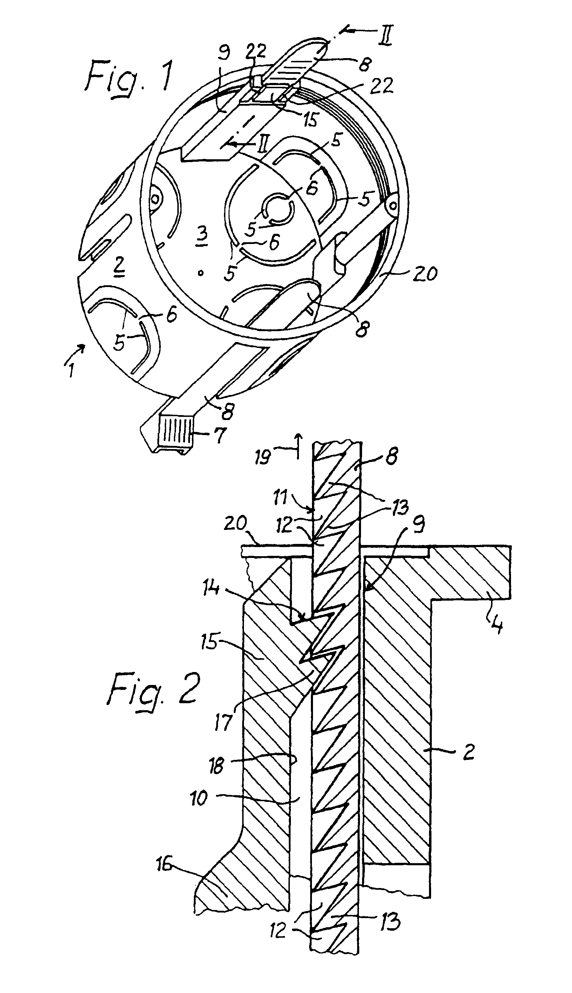

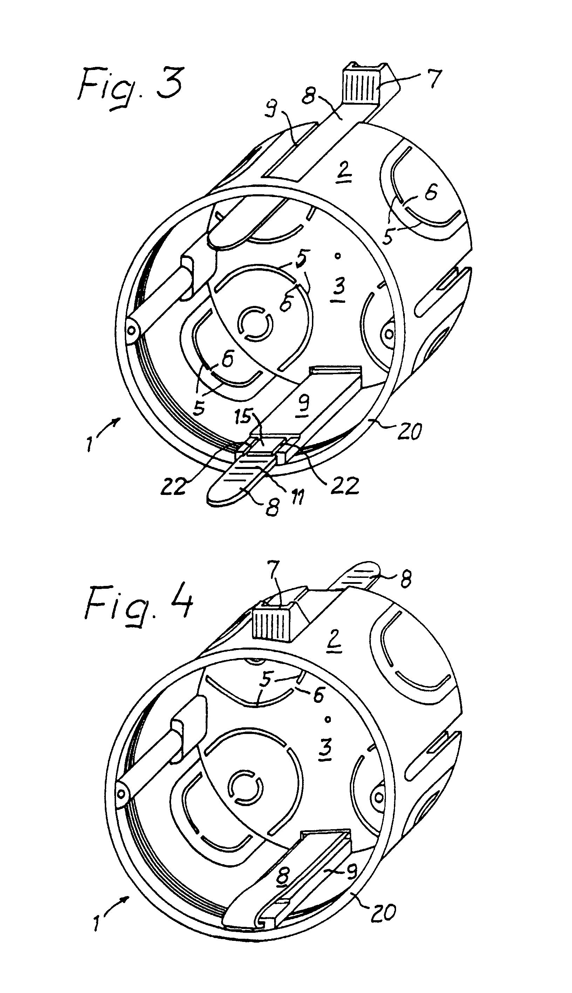

In der Zeichnung sind Ausführungsbeispiele der Erfindung schematisch dargestellt. Fig. 1 zeigt eine erste Ausführungsform der Dose in Schrägansicht, Fig. 2 ist ein Schnitt nach der Linie II-II der Fig. 1 durch ein Detail in größerem Maßstab. Fig. 3 zeigt ein zweites Ausführungsbeispiel der Dose in Schrägansicht vor dem Zurückbiegen der Laschenenden und Fig. 4 zeigt die Dose nach Fig. 3 mit durch die Dosenbodenöffnungen zurückgesteckten Zuglaschenenden.

Beim Ausführungsbeispiel nach den Fig. 1 und 2 hat die Dose 1 zur Aufnahme von Elektroinstallationsmaterial, wie Schaltern, Steckdosen usw., eine im wesentlichen kreiszylindrische Wand 2, die an ihrem einen Stirnende durch einen Boden 3 abgeschlossen, am anderen Stirnende hingegen offen ist. Diese Dose 1 kann in bekannter Weise in einer Öffnung einer Wand, insbesondere einer Hohlwand, befestigt werden, welche Öffnung im wesentlichen kreisförmigen Querschnitt hat. Am offenen Stirnende ist die Dose 1 mit einem kreisförmigen Flansch 4 versehen, der als Einschubbegrenzung dienen kann. In der Wand 2 und im Boden 3 sind Schlitze 5 vorgesehen, welche Bereiche der Wand 2 bzw. des Bodens 3 begrenzen, die über Sollbruchstellen 6 mit den restlichen Abschnitten der Wand 2 bzw. des Bodens 3 verbunden sind, so daß in einfacher Weise Einführungsdurchbrüche für Kabel oder dgl. gebildet werden können.

Zur Befestigung der Dose 1 in der Öffnung der Hohlwand dienen zwei Pratzen 7, deren jede am einen Ende einer Zuglasche 8 befestigt ist. Diese Zuglaschen 8 bestehen ebenso wie die Dose 1 aus Kunststoffmaterial, welches für die Zuglaschen 8 zweckmäßig biegbar und sehr reißfest sein soll. Jede Zuglasche 8 ist in einer Führung 9 in Axialrichtung der Dose 1 verschiebbar geführt. Jede Führung 9 ist an der Innenseite der Wand 2 der Dose 1 angeordnet, erstreckt sich in Axialrichtung der Dose 1 und ist mit dieser einstückig, vorzugsweise durch Spritzen, geformt. Jede Führung 9 begrenzt einen im Querschnitt rechteckigen Hohlraum 10 (Fig. 2), der an seinen beiden Stirnenden offen ist und in welchem die Zuglasche 8, deren Grundquerschnitt ebenfalls rechteckig ist und die, wenn von der im folgenden beschriebenen Verzahnung abgesehen wird, mit Spiel im Hohlraum 10 geführt ist, so daß die Zuglasche 8 sich leicht in Axialrichtung der Dose 1 aus dieser herausziehen läßt. Die erwähnte Verzahnung 11 (Fig. 2) ist an der Zuglasche 8 in Form einer langen Zahnreihe ausgebildet, die von Vertiefungen 12 im Kunststoffmaterial der Zuglasche 8 gebildet ist. Die von jeweils zwei einander benachbarten Vertiefungen 12 begrenzten Zähne 13 sind gegen den Boden 3 der Dose 1 zu geneigt. Diese Verzahnung 11 arbeitet mit einer Gegenverzahnung 14 (Fig. 2) zusammen, die an einer federnden Zunge 15 der Führung 9 vorgesehen ist. Diese federnde Zunge 15 ist von einem Innenwandteil der Führung 9 gebildet, der einstückig mit der restlichen Führung 9 ausgebildet ist, jedoch gegenüber diesem restlichen Innenwandteil 16 eine verringerte Wandstärke aufweist (Fig. 2). Der die Zunge 15 bildende Wandteil erstreckt sich in Form eines Lappens in Achsrichtung der Führung 9, d. h. in jener Richtung, in welcher die Längsrichtung der Zuglasche 8 liegt. Der die federnde Zunge 15 bildende Lappen ist durch zwei in Achsrichtung der Führung 9 verlaufende Schlitze 22 (Fig. 1) von den benachbarten Wandteilen der Führung 9 getrennt. An seinem dem offenen Stirnende der Dose 1 abgewandten Ende geht die vom Lappen gebildete Zunge 15 jedoch einstückig in die Wand der Führung 9 über. Statt dieser einstückigen Ausbildung der federnden Zunge mit der sie tragenden restlichen Fühung 9 könnte die federnde Zunge auch von einem eingegossenen Metallstreifen gebildet sein, jedoch ist die vorhin beschriebene einstückige Ausbildung aus Fertigungsgründen günstiger.

Die Gegenverzahnung 14 hat nur zwei Zähne 17, die aus der Oberfläche 18 der Zunge vorragen und vom Boden 3 der Dose 1 weg geneigt sind. Die Form der Zähne 17 der Gegenverzahnung 14 entspricht zweckmäßig jener der Verzahnung 11, so daß ein satter Eingriff der Gegenverzahnung 14 in die Verzahnung 11 gesichert ist. Die beschriebene Zahnneigung und die federnde Ausbildung der Zunge 15 bewirkt, daß die Zuglasche 8 leicht in Richtung des Pfeiles 19 (Fig. 2) aus der Dose 1 herausgezogen werden kann, wobei für jeden Zahn 13 der Verzahnung 11 die federnde Zunge 15 etwas zurückgedrückt wird, wobei ihre Zähne 17 über die Zähne 13 der Verzahnung 11 gleiten und der Reihe nach in die Vertiefungen 12 einrasten. Dies erfolgt so lange, bis die Pratzen 7 an der hinteren Oberfläche der Hohlwand zur Anlage kommen und dadurch die Dose 1 in der Öffnung der Hohlwand festspannen. Ein Hineinziehen der Dose 1 in die Wand wird durch den Flansch 4 verhindert. Wenn es sich um keine Hohlwand, sondern um eine massive Wand handelt, in welcher die Dose 1 montiert werden soll, dann sind die Pratzen 7 zweckmäßig keilförmig ausgebildet und werden beim Herausziehen der Zuglasche 8 in den Ringspalt zwischen der Mantelwand der Wandöffnung und der Außenfläche der Wand 2 der Dose 1 hineingezogen und klemmen so die Dose fest. Das Herausziehen der Zuglaschen 8 bei der Montage der Dose 1 kann von Hand aus oder noch einfacher mittels einer Zange erfolgen.

Die federnde Zunge mit den an ihr sitzenden Zähnen 17 läßt sich problemlos bei der Fertigung der Dose 1 mitformen. Dies wird dadurch erleichtert, daß die Zunge 15 an jenem Ende der Führung 9 angeordnet ist, welches dem Rand 20 der Dose benachbart ist.

Der federnde Charakter der Zunge 15 ermöglicht es, die Dose auch wieder zu demontieren, wenn dies gewünscht ist. Hiezu braucht die Zunge 15, etwa durch Einführung eines Werkzeuges in den Hohlraum 10, nur nach innen gedrückt zu werden, so daß die Zähne 18 außer Eingriff mit den Vertiefungen 12 der Zuglasche 8 gelangen. Die Zuglasche 8 kann dann problemlos zurückgedrückt werden, so daß die Pratzen 7 ihre Klemmfunktion verlieren und dadurch die Dose 1 aus der Wandöffnung demontiert werden kann.

Die Zuglaschen 8 sind zweckmäßig mit einer beträchtlichen Überlänge versehen, um eine ausreichend lange Zahnreihe der Verzahnung 11 anordnen zu können, so daß die Dose 1 problemlos in Wänden unterschiedlicher Stärke montiert werden kann. Die nach der Montage verbleibende Überlänge der Zuglaschen 8 kann abgeschnitten werden. Um auch diesen Arbeitsgang bzw. das hiefür erforderliche Werkzeug einzusparen, ist gemäß der Weiterbildung nach den Fig. 3 und 4 die Anordnung so getroffen, daß die überstehenden Enden der Zuglaschen 8 in den Innenraum der Dose 1 zurückgebogen werden und, falls erforderlich, durch Durchstecköffnungen 21 im Boden 3 der Dose hindurchgesteckt werden können. Diese Durchstecköffnungen 21 sind zweckmäßig jeweils der zugeordneten Führung 9 unmittelbar benachbart angeordnet und so groß, daß die jeweilige Zuglasche 8 problemlos passend eingeschoben werden kann. Für eine solche Ausbildung ist es zweckmäßig, die Zuglaschen 8 aus zwar reißfestem, jedoch relativ biegsamem Material, auszubilden. Hiefür geeignete Kunststoffmaterialien sind handelsüblich.

Die Anordnung der von Schlitzen gebildeten Durchstecköffnungen 21 nahe den Führungen 9 hat den Vorteil, daß die in die Dose zurückgebogenen Überlängen der Zuglaschen 8 den Innenraum der Dose 1 im wesentlichen frei lassen und dadurch die Montage der Elektroinstallation, z. B. eines Schalters, nicht behindern.

## Patentansprüche

1. Elektroinstallationsdose für die Montage in Wänden, insbesondere Hohlwänden, mit relativ zur Dose (1) beweglichen Pratzen (7) zur Befestigung der Dose (1) in einer Öffnung der Wand (2), wobei jede Pratze (7) an einer Zuglasche (8) befestigt ist, die in Achsrichtung der Dose (1) in einer Führung (9) der Dose (1) verschiebbar geführt und mit einer Verzahnung (11) versehen ist, der eine Gegenverzahnung (14) an der Dose (1) zugeordnet ist, **dadurch gekennzeichnet, daß** die Gegenverzahnung (14) an einer federnden Zunge (15) der Führung (9) vorgesehen ist, welche Zunge (15) einstückig mit der restlichen Führung (9) ausgebildet und von einem sich in Achsrichtung der Führung (9) erstreckenden Lappen gebildet ist, der durch zwei in Achsrichtung der Führung (9) verlaufende Schlitze (22) von den benachbarten Wandteilen der Führung (9) getrennt ist, an seinem dem Rand (20) der Dose (1) abgewendeten Ende jedoch in die Führung (9) übergeht.

2. Elektroinstallationsdose nach Anspruch 1, **dadurch gekennzeichnet, daß** die federnde Zunge (15) von einem Innenwandteil der Führung (9) gebildet ist.

3. Elektroinstallationsdose nach Anspruch 2, **dadurch gekennzeichnet, daß** der die federnde Zunge (15) bildende Innenwandteil der Führung (9) gegenüber der restlichen Innenwand (16) der Führung (9) eine verringerte Wandstärke aufweist.

4. Elektroinstallationsdose nach Anspruch 2 oder 3, **dadurch gekennzeichnet, daß** die federnde Zunge (15) an jenem Ende der Führung (9) angeordnet ist, welches dem Rand (20) der Dose (1) benachbart ist.

5. Elektroinstallationsdose nach einem der Ansprüche 1 bis 4, **dadurch gekennzeichnet, daß** die Zähne (13) der Verzahnung (11) der Zuglasche (8) gegen den Boden (3) der Dose (1) zu geneigt sind, wogegen die Zähne (17) der Gegenverzahnung (14) vom Boden (3) der Dose (1) weg geneigt sind.

6. Elektroinstallationsdose nach einem der Ansprüche 1 bis 5, **dadurch gekennzeichnet, daß** die Verzahnung (11) an der Zuglasche (8) eine lange Zahnreihe bildet, wogegen die Gegenverzahnung (14) nur von wenigen, z.B. zwei, Zähnen (17) gebildet ist.

7. Elektroinstallationsdose nach einem der Ansprüche 1 bis 6, **dadurch gekennzeichnet, daß** die Gegenverzahnung (14) an der federnden Zunge (15) von aus der Oberfläche (18) der Zunge (15) vorspringenden Zähnen (17) gebildet ist.

8. Elektroinstallationsdose nach einem der Ansprüche 1 bis 7, **dadurch gekennzeichnet, daß** jede Zuglasche (8) aus biegsamem Material, z.B. einem reißfesten Kunststoffband, besteht und daß der Boden (3) der Dose (1) für das zurückgebogene Ende jeder Zuglasche (8) eine Durchstecköffnung (21) aufweist.

9. Elektroinstallationsdose nach Anspruch 8, **dadurch gekennzeichnet, daß** jede Durchstecköffnung (21) der ihr zugeordneten Führung (9) unmittelbar benachbart ist.

## Claims

1. Electrical installation box for mounting in walls, in particular hollow walls, having claws (7) which can be moved in relation to the box (1), for the purpose of securing the box (1) in an opening of the wall (2), with each claw (7) being secured to a pull strap (8) which is slidably guided in an axial direction of the box (1) in a guide (9) of the box (1) and which is provided with a tooth construction (11), associated with which there is a counter-tooth construction (14) on the box (1), **characterised in that** the counter-tooth construction (14) is provided on a resilient tongue (15) of the guide (9) which springly tongue (15) is formed in one piece with the rest of the guide (9) and is formed by a tab which extends in the axial direction of the guide (9), is separated from the adjacent wall portions of the guide (9) by means of two slits (22) extending in the axial direction of the guide (9), yet at its end remote from the edge (20) of the box (1) merges into the quide (9).

2. Electrical installation box according to claim 1, **characterised in that** the resilient tongue (15) is formed by an inner wall portion of the guide (9)

3. Electrical installation box according to claim 2, **characterised in that** the inner wall portion of the guide (9) forming the resilient tongue (15) has a reduced wall thickness in comparison with the rest of the inner wall (16) of the guide (9).

4. Electrical installation box according to claim 2 or 3, **characterised in that** the resilient tongue (15) is arranged at that end of the guide (9) which is adjacent to the edge (20) of the box (1).

5. Electrical installation box according to one of claims 1 to 4, **characterised in that** the teeth (13) of the tooth construction (11) of the pull strap (9) are inclined towards the base (3) of the box (1), whilst the teeth (17) of the counter-tooth construction (14) are inclined away from the base (3) of the box (1).

6. Electrical installation box according to one of claims 1 to 5, **characterised in that** the tooth construction (11) on the pull strap (8) forms a long row of teeth, whilst the counter-tooth construction (14) is formed by only a few, for example two, teeth (17).

7. Electrical installation box according to one of claims 1 to 6, **characterised in that** the counter-tooth construction (14) on the resilient tongue (15) is formed by teeth (17) projecting from the surface (18) of the tongue (15).

8. Electrical installation box according to one of claims 1 to 7, **characterised in that** each pull strap (8) consists of flexible material, for example a tear-resistant plastics band, and **in that** the base (3) of the box (1) has a push-through opening (21) for the end of each pull strap (8) that has been bent back.

9. Electrical installation box according to claim 8, **characterised in that** each push-through opening (21) is immediately adjacent to the guide (9) associated with it.

## Revendications

1. Boîte de raccordement pour installation électrique à monter dans des murs, notamment dans des murs creux, comprenant des ancrages (7) mobiles par rapport à la boîte de raccordement (1) pour la fixation de ladite boîte de raccordement (1) dans un orifice prévu dans le mur (2), chaque ancrage (7) étant fixé sur une patte coulissante (8) guidée en translation, dans l'axe de la boîte de raccordement (1), dans un guidage (9) de ladite boîte de raccordement (1) et doté d'un crantage (11) coopérant avec un crantage complémentaire (14) sur la boîte de raccordement (1), **caractérisée en ce que** le crantage complémentaire (14) est prévu sur une languette élastique (15) du guidage (9) et **en ce que** cette languette élastique (15) estformée monobloc avec le reste du'guidage (9) et
est formée d'une patte orientée dans l'axe du guidage (9), séparée des parties contiguës des parois du guidage (9) par deux entailles (22) ménagées dans l'axe dudit guidage (9), mais qui, à son extrémité opposée au bord (20) de la boîte de raccordement (1), se prolonge par le guidage (9) lui-même.

2. Boîte de raccordement pour installation électrique selon la revendication 1, **caractérisée en ce que** la languette élastique (15) est formée par une partie de la paroi interne du guidage (9).

3. Boîte de raccordement pour installation électrique selon la revendication 2, **caractérisée en ce que** la partie de la paroi interne du guidage (9) formant la languette élastique (15) a une épaisseur inférieure au reste de la paroi interne (16) du guidage (9).

4. Boîte de raccordement pour installation électrique selon la revendication 2 ou 3, **caractérisée en ce que** la languette élastique (15) est agencée à l'extrémité du guidage (9) qui est contiguë au bord (20) de la boîte de raccordement (1).

5. , Boîte de raccordement pour installation électrique selon l'une quelconque des revendications 1 à 4, **caractérisée en ce que** les crans (13) du crantage (11) de la patte coulissante (8) sont inclinés vers le fond (3) de la boîte de raccordement (1) tandis que les crans (17) du crantage complémentaire (14) sont inclinés à partir du fond (3) de la boîte de raccordement (1).

6. Boîte de raccordement pour installation électrique selon l'une quelconque des revendications 1 à 5, **caractérisée en ce que** le crantage (11) consiste en une longue rangée de crans sur la patte coulissante (8), tandis que le crantage complémentaire (14) est formé d'un petit nombre de crans (17), par exemple deux.

7. Boîte de raccordement pour installation électrique selon l'une quelconque des revendications 1 à 6, **caractérisée en ce que** le crantage complémentaire (14) de la languette élastique (15) est formé par des crans (17) en saillie sur la surface (18) de la languette (15).

8. Boîte de raccordement pour installation électrique selon l'une quelconque des revendications 1 à 7, **caractérisée en ce que** chaque patte coulissante (8) est en matière flexible, par exemple une bande de plastique qui résiste à la déchirure et **en ce que** le fond (3) de la boîte de raccordement (1) présente un orifice de passage (21) pour l'extrémité repliée de chaque patte coulissante (8).

9. Boîte de raccordement pour installation électrique selon la revendication 8, **caractérisée en ce que** chaque orifice de passage (21) est disposé à proximité directe du guidage correspondant (9).
